# EUROPEAN PATENT APPLICATION

(11) **EP 4 057 304 A1**
(43) Date of publication of application: **14.09.2022**
(21) Application number: 20884571.9
(22) Date of filing: 23.03.2020
(51) Int. Cl.: H01F 27/28, H02M 3/335

(54) **PLANAR TRANSFORMER, POWER CONVERTER, AND CIRCUIT BOARD**

(30) Priority: 08.11.2019 CN 201911090375
(71) Applicant: Shenzhen Huntkey Electric Co., Ltd., Shenzen, Guangdong 518129 (CN)
(72) Inventor: XIAO, Minli, Shenzhen, Guangdong 518129 (CN)
(74) Representative: Wang, Bo
(86) International application number: PCT/CN2020/080758
(87) International publication number: WO 2021/088298

(57) **Abstract**

A planar transformer includes a secondary coil layer, a shielding layer and a primary coil layer disposed in a PCB. The secondary coil layer includes at least part of a secondary coil. The secondary coil are provided with a secondary static electrical point. The shielding layer includes a shielding coil which includes a shielding coil segment of N1 turns and a second shielding coil segment of N2 turns. The first shielding coil segment includes a first shielding static electrical point and a first shielding free end. The second shielding coil segment includes a second shielding static electrical point and a second shielding free end. The winding direction of the first shielding coil segment is the same as the secondary coil, and the winding direction of the first shielding coil segment is opposite to the second shielding coil segment.

## Description

This application claims the priority of Chinese patent application No. 201911090375. 0, which is incorporated by reference herein in its entirety.

### FIELD OF THE INVENTION

The application relates to the field of planar transformers, in particular to a planar transformer, a power converter and a circuit board.

### BACKGROUND OF THE INVENTION

The common mode current of a transformer has a great impact on EMI (ElectroMagnetic Interference), so it is important to reduce the common-mode current caused by the primary coil as much as possible. Generally, in conventional transformers, the common-mode current is adjusted by adjusting the number of turns of the shielding winding of the transformer, to reduce the interference of EMI common-mode noise.

Planar transformers are small in size and are increasingly used in switching power supplies. However, existing planar transformers are often difficult to obtain a good common mode current suppression effect.

### SUMMARY OF THE INVENTION

The purpose of the application is to overcome the defects of the prior art and provide a planar transformer and a power converter to reduce the common mode current between the primary and secondary coils, thereby reducing the interference of EMI common mode noise.

In order to achieve the above purpose, the technical solutions adopted by the application is as follows.

A planar transformer includes a secondary coil layer, a first shielding layer and a primary coil layer disposed in a printed circuit board (PCB), the secondary coil layer comprising at least part of a secondary coil, the secondary coil being provided with a secondary static electrical point, the first shielding layer being provided between the secondary coil layer and the primary coil layer. The first shielding layer includes a first shielding coil, the first shielding coil comprising a first shielding coil segment of N1 turns and a second shielding coil segment of N2 turns. The first shielding coil segment includes a first shielding static electrical point and a first shielding free end, and the second shielding coil segment includes a second shielding static electrical point and a second shielding free end. The winding direction of the first shielding coil segment is the same as the winding direction of the secondary coil, and the winding direction of the first shielding coil segment is opposite to the winding direction of the second shielding coil segment. The winding direction of the secondary coil refers to: the winding direction of the secondary coil starting from the secondary static electrical point; the winding direction of the first shielding coil segment refers to: the winding direction of the first shielding coil segment starting from the first shielding static electrical point; the winding direction of the second shielding coil segment refers to: the winding direction of the second shielding coil segment starting from the second shielding static electrical point.

Preferably, N1+N2≤1 when the number of turns of the part of the secondary coil in the secondary coil layer is 1.

Preferably, N1 > 1 and N1+N2≤2 when the number of turns of the part of the secondary coil in the secondary coil layer is 2.

Preferably, the planar transformer further includes a second shielding layer. The secondary coil layer includes a first secondary coil layer and a second secondary coil layer. The first secondary coil layer comprises a first secondary coil as part of the secondary coil, and the second secondary coil layer comprises a second secondary coil as part of the secondary coil. Neither the first secondary coil nor the second secondary coil is greater than 1 turn. The first secondary coil has a number of turns substantially equal to the second secondary coil. The first shielding layer is located between the first secondary coil layer and the primary coil layer. The second shielding layer is located between the second secondary coil layer and the primary coil layer. The second shielding layer includes a second shielding coil, and the second shielding coil includes a third shielding static electrical point and a third shielding free end. The winding direction of the second shielding coil is the same as the winding direction of the secondary coil. The second shielding coil has a number of turns substantially equal to the second secondary coil. The winding direction of the second shielding coil refers to: the winding direction of the second shielding coil starting from the third shielding static electrical point.

Preferably, the width of the first shielding coil segment and the width of the second shielding coil segment are respectively substantially equivalent to the width of the secondary coil, and the first shielding coil segment and the second shielding coil segment are in the same winding ring.

Preferably, N1>N2.

Preferably, the first shielding layer further includes a first auxiliary winding. The first auxiliary winding is provided with a first auxiliary static electrical point and a first auxiliary dynamic electrical point. The first auxiliary winding is located on the radially inner side of the first shielding coil. The first auxiliary winding has a number of turns substantially equal to the secondary coil. The winding direction of the first auxiliary winding is the same as the winding direction of the secondary coil, and the winding direction of the first auxiliary winding refers to the winding direction of the first auxiliary winding starting from the first auxiliary static electrical point. Alternatively, the second shielding layer further includes a second auxiliary winding. The second auxiliary winding is provided with a second auxiliary static electrical point and a second auxiliary dynamic electrical point. The second auxiliary winding is located on the radially inner side of the second shielding coil. The number of turns of the second auxiliary winding and the number of turns of the second shielding coil are substantially equivalent to the number of turns of the secondary coil respectively. The winding direction of the second auxiliary winding is the same as the winding direction of the secondary coil, and the winding direction of the second auxiliary winding refers to the winding direction of the second auxiliary winding starting from the second auxiliary static electrical point.

Preferably, 0.8≤N1+N2<1 when the number of turns of the part of the secondary coil in the secondary coil layer is 1.

Preferably, N1 > 1 and 1.8≤N1+N2<2 when the number of turns of the part of the secondary coil in the secondary coil layer is 2.

The application also provides a planar transformer comprising a bottom secondary coil, a bottom shielding layer, a primary coil, a top shielding layer and a top secondary coil in order from bottom to top. The top shielding layer and the bottom shielding layer both includes shielding coils. At least one shielding coil in the top shielding layer and the bottom shielding layer includes clockwise coils of N1 turns and counterclockwise coils of N2 turns. The compensation common mode current of the planar transformer is adjusted by adjusting the ratio of N1 to N2.

Preferably, the sum of N1 and N2 is less than 1.

Preferably, the bottom secondary coil is wound clockwise or counterclockwise starting from the secondary static electrical point potential. The top secondary coil and the bottom secondary coil are connected in series or in parallel, and the top secondary coil is wound in the same direction as the bottom secondary coil.

Preferably, the shielding coil of the bottom shielding layer includes clockwise coil with N1 turns and counterclockwise coil with N2 turns. The shielding coil of the top shielding layer is a coil with 1 turn starting from a primary static electrical point potential, which is wound in the same direction as the top secondary coil.

Preferably, the shielding coil of the top shielding layer includes clockwise coils of N1 turns and counterclockwise coils of N2 turns. The shielding coil of the bottom shielding layer is a coil of 1 turn starting from a primary static electrical point potential, which is wound in the same direction as the bottom secondary coil.

Preferably, the top shielding layer or/and the bottom shielding layer further includes an auxiliary winding. The auxiliary winding is also provided in the inner ring of the shielding coil of the top shielding layer or/and the bottom shielding layer. The auxiliary winding has a number of turns less than 3. One end of the shielding coil of the top shielding layer or the bottom shielding layer is connected to a primary static electrical point, and the other end of the shielding coil of the top shielding layer or the bottom shielding layer is suspended.

The application also provides a power converter comprising a planar transformer as described above.

Preferably, the number of PCB layers of the planar transformer is 6-14 layers when the output voltage of the power converter is between 5v-24v.

The application also provides a circuit board with power conversion function comprising a planar transformer as described above.

Preferably, the planar transformer is formed on the circuit board by a circuit board fabrication process; or the planar transformer is electrically connected to the circuit board.

Compared with the prior art, the application has the following beneficial effects:

By adopting the above-mentioned scheme of the embodiment, the first shielding coil segment of N1 turns and the second shielding coil segment of N2 turns as shielding coils are provided in the shielding layer, both of them jointly play the role of suppressing the common mode current, and finally work together to make the total common-mode current very small.

The planar transformer designed by the application is suitable for adapters or chargers with an output voltages of 5V-24V, or power converters, adapters or chargers with a fixed voltage (5V/12V/15V/19V/20V/24V) or a variable voltage (5V-9V/5V-11V/5V-12V/5V-15V/5V-20V) in the voltage range of 5V-24V.

Based on the different voltage output range of the power conversion circuit, the ratio of the clockwise coil of the shielding layer to the counterclockwise coil of the shielding layer may be flexibly designed to vary from 0.1/0.9 to 0.9/0.1. The ratio of the clockwise to the counterclockwise coil of the shielding layer and the auxiliary winding varies from 0.1 to 1.5/1. By selecting an appropriate ratio combination, the optimal EMI performance can be achieved, while the number of PCB layers of the planar transformer can be reduced, so that the cost of the planar transformer can be reduced.

Other beneficial effects of the application will be described by presenting specific technical features and technical schemes in the specific embodiments, and those skilled in the art will understand the beneficial technical effects brought about by the technical features and technical solutions through the presentation of the technical features and technical solutions.

### BRIEF DESCRIPTION OF THE DRAWINGS

The preferred embodiments of the present application will be described below with reference to the accompanying drawings, in which:
FIG. 1 is a schematic cross-sectional view of the multilayer coil of a planar transformer in accordance with the Embodiment 1 and Embodiment 3 of the application;
FIG. 2 is a diagram of coil winding of each layer of the planar transformer in accordance with the Embodiment 1 of the application;
FIG. 3 is a diagram of coil winding of each layer of the planar transformer in accordance with the Embodiment 1 of the application;
FIG. 4 is a diagram of coil winding of each layer of the planar transformer in accordance with the Embodiment 2 of the application;
FIG. 5 is a diagram of coil winding of each layer of the planar transformer in accordance with the Embodiment 3 of the application;
FIG. 6 is a diagram of coil winding of the top or bottom shielding layer of the planar transformer in accordance with the Embodiment 3 of the application;
FIG. 7 is a diagram of coil winding of the bottom shielding layer and the bottom secondary coil of the planar transformer in accordance with the Embodiment 3 of the application;
FIG. 8 is a diagram of coil winding of the top shielding layer and the top secondary coil of the planar transformer in accordance with the Embodiment 3 of the application;
FIG. 9 is a schematic cross-sectional view of the multilayer coil of the first planar transformer in accordance with the Embodiment 4 of the application;
FIG. 10 is a diagram of coil winding of each layer of the first planar transformer in accordance with the Embodiment 4 of the application;
FIG. 11 is a diagram of coil winding of each layer of the second planar transformer in accordance with the Embodiment 4 of the application;
FIG. 12 is a schematic cross-sectional view of the multilayer coil of the third planar transformer in accordance with the Embodiment 4 of the application
FIG. 13 is a diagram of coil winding of each layer of the third planar transformer in accordance with the Embodiment 4 of the application;
FIG. 14 is a schematic diagram of a first application of a transformer in accordance with an embodiment of the application;
FIG. 15 is another schematic diagram of a second application of a transformer in accordance with an embodiment of the application.

### DETAILED DESCRIPTION

### Embodiment 1:

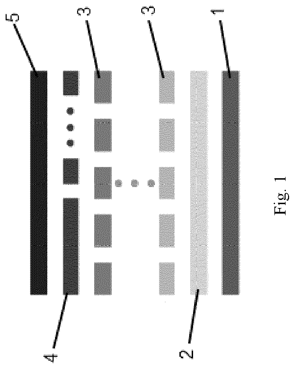

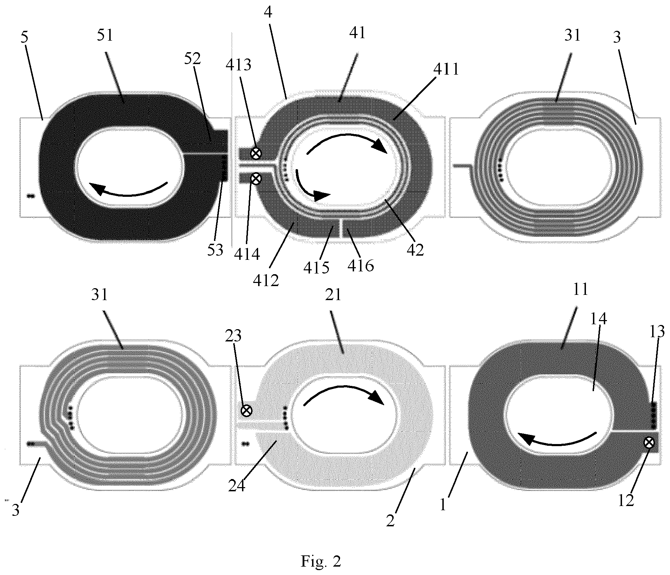

As shown in FIG.1 and FIG.2, one embodiment of the planar transformer of the application is a secondary-primary-secondary structure, comprising a secondary coil layer 1, a shielding layer 2, a plurality of primary coil layers 3, a shielding layer 4 and a secondary coil layer 5, which are all located on the PCB board from bottom to top. The secondary coil layer 1 and the secondary coil layer 5 are both provided with at least part of a secondary coil, and the two parts of the secondary coils constitute the secondary coil which is provided with a secondary static electrical point 12 and a secondary static electrical point 52. The shielding layer 4 is arranged between the secondary coil layer 5 and a primary coil layer 3, and the shielding layer 2 is arranged between the secondary coil layer 1 and the primary coil layer 3.

The secondary coil layer 1 includes a secondary coil 11, the secondary coil layer 5 includes a secondary coil 51, the shielding layer 2 includes a shielding coil 21, the shielding layer 4 includes a shielding coil 41, and the primary coil layer 3 includes a primary coil 31. As can be seen in FIG. 2, the secondary coil 11, when viewed in the direction of looking down on the surface of the secondary coil 11, starts at the secondary static electrical point 12 and wraps around the magnetic core clockwise to the end 13, and then connects to the end 53 of the secondary coil 51. The secondary coil 51 continues to wrap around the magnetic core clockwise from the end 53 to the secondary static electrical point 52. In other words, the winding direction of the secondary coil refers to: a direction in which the secondary coil wraps around the magnetic core of the planar transformer (after assembly, the magnetic core is located at the position 14), starting from the secondary static electrical point 12. In this embodiment, the secondary coil 11 and the secondary coil 51 are connected in series to form the entire secondary coil. The number of turns of the secondary coil 11 and the secondary coil 51 are substantially equivalent, that is, the same or nearly the same, for example, the difference in the number of turns between the two is not more than 0.2 turns. In the embodiment, the number of turns of the secondary coil 11 and the number of turns of the secondary coil 51 are both 1 turn or close to 1 turn, so that this planar transformer can meet the requirements when applied to high power density power converters (such as adapters or chargers) with higher current in the secondary coil and a wider secondary coil.

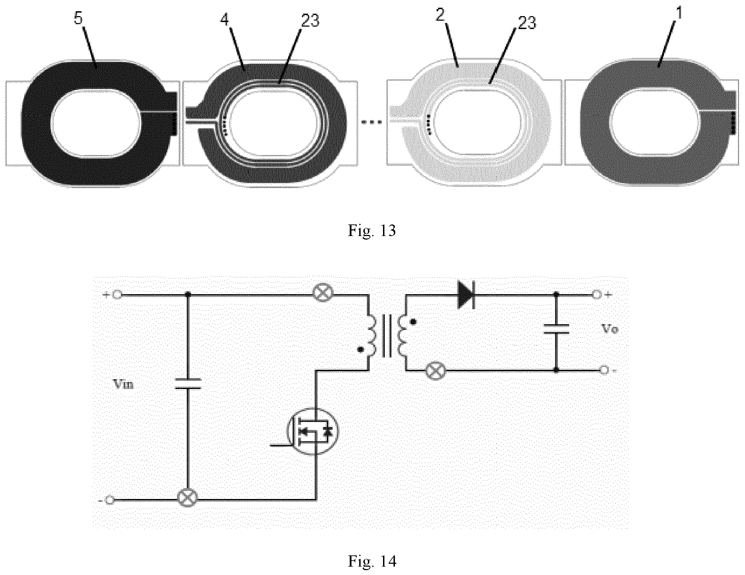

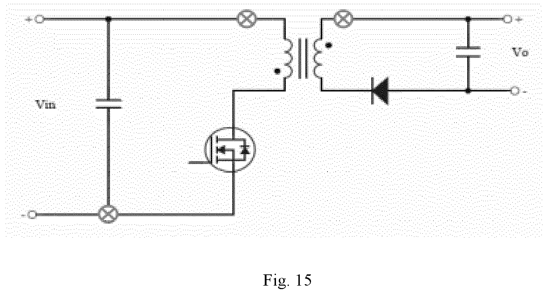

The shielding layer 4 includes the shielding coil 41. The shielding coil 41 includes a first shielding coil segment 411 of N1 turns and a second shielding coil segment 412 of N2 turns. When the number of turns of the secondary coil 51 is 1, then 0<N1<1 , 0<N2<1, N1+N2≤1. The first shielding coil segment 411 is provided with a first shielding static electrical point 413 and a first shielding free end 416 (the free end is not connected to any circuit). The second shielding coil segment 412 is provided with a second shielding static electrical point 414 and a second shielding free end 415 (the free end is not connected to any circuit). Looking down on the shielding coil 41 and the secondary coil from the same direction, the winding direction of the first shielding coil segment 411 is the same as the winding direction of the secondary coil, and the winding direction of the first shielding coil segment 411 is opposite to the winding direction of the second shielding coil segment 412. The winding direction of the first shielding coil segment 411 refers to the direction in which the first shielding coil segment 411 wraps around the magnetic core of the planar transformer, starting from the first shielding static electrical point 413 to the first shielding free end 416. The winding direction of the second shielding coil segment 412 refers to the direction in which the second shielding coil segment 412 wraps around the magnetic core of the planar transformer, starting from the second shielding static electrical point 414 to the second shielding free end 415. The first shielding static electrical point 413 and the second shielding static electrical point 414 are used to connect to the same or different static electrical points on the primary coil side (the static electrical points on the primary coil side includes a common end of the primary coil and the capacitor, and a ground end on the primary side, as the location of two Ⓧ on the primary coil side shown in FIG.14 or FIG.15). Preferably, the first shielding static electrical point 413 and the second first shielding static electrical point 414 may be connected to the same shielding static electrical point on the primary coil side.

The primary coil layer includes a plurality of sub-primary coil layers 3, each sub-primary coil layer includes a sub-primary coil 31, and all the sub-primary coils 31 are connected in series to form the primary coil.

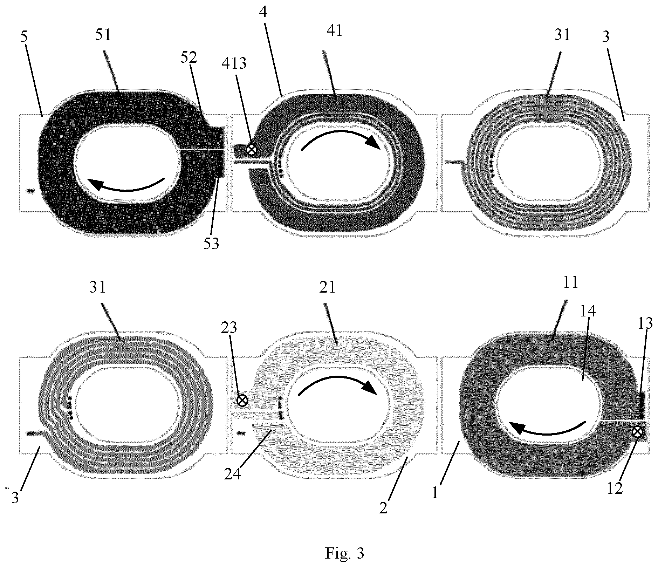

Theoretically, as shown in FIG. 3, when the shielding coil 41 in the shielding layer 4 adopts the shielding coil 21 in the shielding layer 2, that is, the shielding coil 41, the shielding coil 21, the secondary coil 51 and the secondary coil 11 have the substantially equivalent number of turns, i.e., the same or nearly the same (e.g., the difference between the number of turns of the shielding coil 21 and the secondary coil 11 does not exceed 0.2), and the winding directions of the four parts are the same, then the combination of the shielding coils of the shielding layer 4 and the shielding layer 2 may make the sum of the common mode currents between the primary coil and the secondary coil in the whole planar transformer be zero, that is, there is no common mode current conduction interference to the outsides. However, in the actual manufacturing process of the planar transformer, the shielding coil 41 and the shielding coil 21 as shown in FIG. 3 cannot reduce the sum of the common mode current to a small value. After research, it is found that by adopting the above-mentioned scheme of this embodiment, the first shielding coil segment 411 of N1 turns and the second shielding coil segment 412 of N2 turns are provided in the shielding layer 4 as the shielding coil 41, so that the first shielding coil segment 411 and the second shielding coil segment 412 jointly play a role in suppressing the common mode currents, and finally work together to make the total common mode current very small, for example, 0 or close to 0.

After further study, it is found that in most cases the planar transformer is manufactured in such a way that the number of turns N2 of the second shielding coil segment 412 is smaller than the number of turns N1 of the first shielding coil segment 411, i.e., N2 <N1, in order to make the total common mode current of the entire planar transformer small. Thus, for this purpose, in a preferred embodiment, the number of turns N2 of the second shielding coil segment 412 is set smaller than the number of turns N1 of the first shielding coil segment 411, e.g., N1: N2 = 0.7/0.3 or 0.6/0.4.

In a preferred embodiment, the width of the first shielding coil segment 411 and the width of the second shielding coil segment 412 are substantially equivalent to the width of the secondary coil, respectively (i.e., the percentage difference between the widths of the two widths does not exceed 10%), and the first shielding coil segment 411 and the second shielding coil segment 412 are arranged in the same winding ring, so that the area of the shielding layer is smaller and thus the area of the planar transformer is smaller, while ensuring the effect of suppressing the common mode current.

Assuming that the first shielding coil segment 411 and the second shielding coil segment 412 are located in two different winding rings, respectively (e.g., the second shielding coil segment 412 is on the outside of the first shielding coil segment 411), the shielding layer 4 needs a greater area to accommodate the first shielding coil segment 411 and the second shielding coil segment 412 in the case where the width of the first shielding coil segment 411 and the second shielding coil segment 412 needs to be greater than a certain width. In a preferred embodiment, N1+N2 is close to 1, such as 0.8≤N1+N2<1, i.e., the free end 416 of the first shielding coil segment 411 is close to the free end 415 of the second shielding coil segment 412, so that the gap in the shielding layer is smaller, which is more favorable for suppressing the common mode current.

When the number of turns of the secondary coil 51 is 2 turns, then, 1<N1<2 (i.e., the number of turns of the first shielding coil segment 411 is greater than 1 and less than 2), 0<N2<1 (i.e., the number of turns of the second shielding coil segment 412 is greater than 0 and less than 1), and N1+N2≤2; wherein the second shielding coil segment 412 may be disposed in the winding ring near the inner side of the first shielding coil segment 411, or disposed in the winding ring near the outer side of the first shielding coil segment 411. Preferably, 1.8≤N1+N2<2, that is, the free end 416 of the first shielding coil segment 411 is close to the free end 415 of the second shielding coil segment 412, so that the gap in the shielding layer is smaller, which is more favorable for suppressing the common mode current.

In other embodiments, the secondary coil 51 and the secondary coil 11 may also be connected in parallel to constitute the entire secondary coil.

In a preferred embodiment, as shown in FIG. 2, the shielding layer 4 is further provided with an auxiliary winding 42. The auxiliary winding 42 is provided with an auxiliary static electrical point and an auxiliary dynamic electrical point. The auxiliary winding 42 is located on the radially inner side of the shielding coil. The number of turns of the auxiliary winding 42 is substantially equivalent to the number of turns of the secondary coil, e.g., the difference between the number of turns of the auxiliary winding 42 and the number of turns of the secondary coil does not exceed 0.2. Wherein, in the case where the secondary coil 11 is connected with the secondary coil 51 in series, the number of turns of the secondary coil is the sum of the number of turns of the secondary coil 11 and the secondary coil 51 (e.g., in this embodiment, the number of turns of the auxiliary winding 42 is 2, and the total number of turns of the secondary coil is also 2). The winding direction of the auxiliary winding 42 is the same as the winding direction of the secondary coil, and the winding direction of the auxiliary winding 42 refers to: the winding direction of the auxiliary winding 42 starting from the auxiliary static electrical point. By placing the auxiliary winding 42 within the shielding layer 4, a layer specially used for placing the auxiliary winding 42 can be omitted, so that the purpose of reducing the number of layers of the planar transformer can be achieved.

Of course, the planar transformer can also adopt a primary-secondary-primary structure, that is, from bottom to top, the planar transformer sequentially includes the primary coil layer, the shielding layer, the secondary coil layer, the shielding layer and the primary coil layer, to achieve the purpose of the application.

### Embodiment 2:

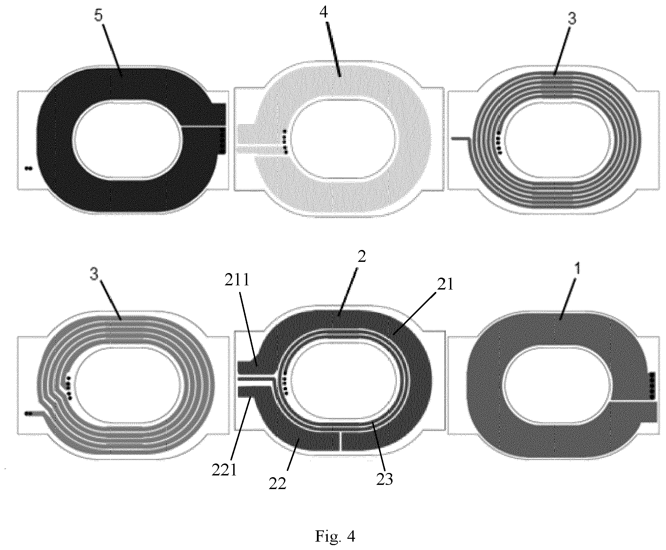

FIG. 4 is another preferred embodiment of the planar transformer of the application, which is substantially the same as the embodiment of FIG. 2. The main differences include: as shown in FIG. 4, the shielding layer 4 of this embodiment uses the shielding coil of the shielding layer 2 in FIG. 2, and the shielding layer 2 of this embodiment uses the shielding coil of the shielding layer 4 in FIG. 2 (i.e., the first shielding coil segment 411 and the second shielding coil segment 412). In addition, the shielding layer 4 of this embodiment does not have an auxiliary winding, while the shielding layer 2 has an auxiliary winding 21.

### Embodiment 3:

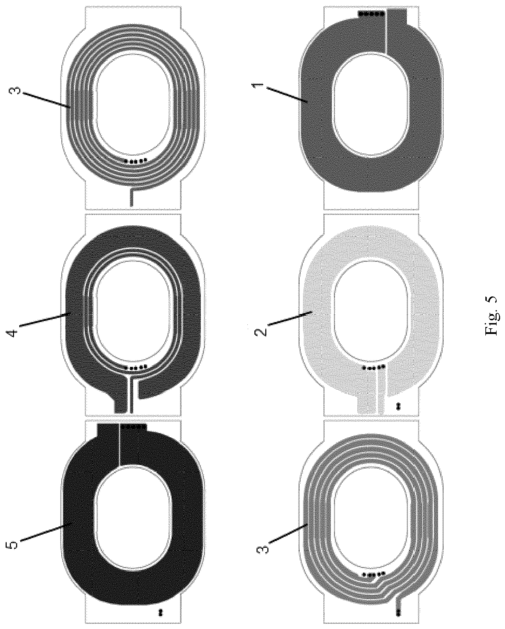

Referring to FIG. 1, this embodiment provides a planar transformer which is a secondary-primary structure, including a bottom secondary coil 1, a bottom shielding layer 2, a primary coil 3, a top shielding layer 4 and a top secondary coil 5, from bottom to top. According to different output power specifications, the top shielding layer 4 and the bottom shielding layer 2 can be connected in series or in parallel. Between the bottom secondary coil and the top secondary coil are the intermediate layer which may be of a multi-layer structure. The planar transformer as a whole may be of a 6 -14 layers structure, as shown in FIG. 5, which is a schematic diagram of a 6-layer structure.

The bottom secondary coil 1 is wound clockwise or counterclockwise starting from a secondary static electrical point potential. The top secondary coil 5 is wound in the same direction as the bottom secondary coil 1.

Wherein, the top shielding layer 4 and the bottom shielding layer 2 both include a shielding coils 21. At least one shielding coil 21 of the top shielding layer 4 and the bottom shielding layer 2 includes a N1-turn clockwise coils and a N2- turn counterclockwise coil, the sum of N1 and N2 being less than 1.

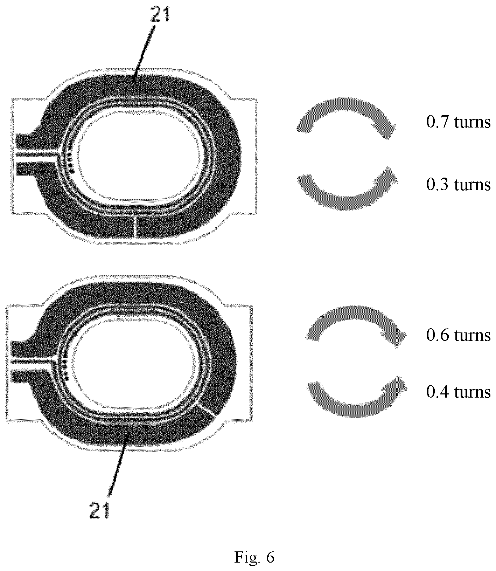

As an embodiment, the shielding coils 21 of both the top shielding layer 4 and the bottom shielding layer 2 include clockwise coils of N1 turns and counterclockwise coils of N2 turns, and the sum of N1 and N2 is less than 1. The optimal EMI performance may be achieved by adjusting the ratio of the clockwise coils to the counter-clockwise coils of the top shielding layer 4 and the bottom shielding layer 2. As shown in FIG. 6, the ratio of the clockwise coils to the counter-clockwise coils is 0.7/0.3 or 0.6/0.4.

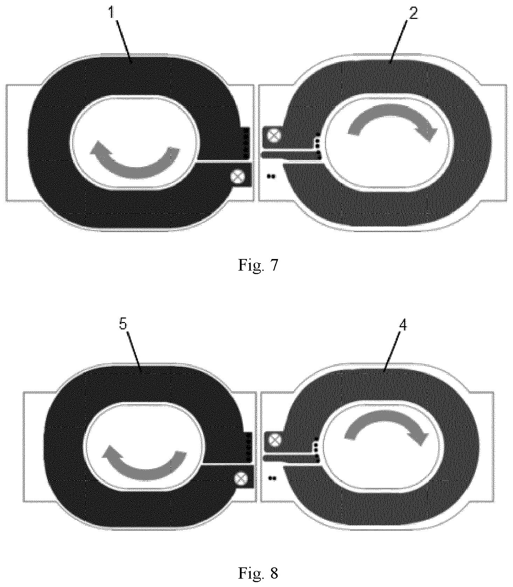

As an embodiment, the top shielding layer 4 include clockwise coils of N1 turns and counterclockwise coils of N2 turns. As shown in FIG. 7, the shielding coil 21 of the bottom shielding layer 2 is a 1-turn coil starting from the primary static electrical point potential, and the winding direction of the bottom shielding layer 2 is the same as that of the bottom secondary coil 1.

As an embodiment, the bottom shielding layer 2 include clockwise coils of N1 turns and counterclockwise coils of N2 turns. As shown in FIG. 8, the shielding coil 21 of the top shielding layer 4 is a 1-turn coil starting from the primary static electrical point potential, and the winding direction of the top shielding layer 4 is the same as that of the top secondary coil 5.

The coils of the top secondary coil 5 or the bottom secondary coil 1 are full turns, preferably 1 or 2 turns. The wide copper foil as the coil can pass high currents and is suitable for adapters.

For adapters or chargers with output voltages of 5~20v, 5~9v, 5~11v, the total number of layers of the PCB is 6-14.

### Embodiment 4:

This embodiment provides a planar transformer based on Embodiment 1, by adding an auxiliary winding in the same layer of the inner circle of the shielding coil, to reduce the thickness of the total board layer, to reduce the cost.

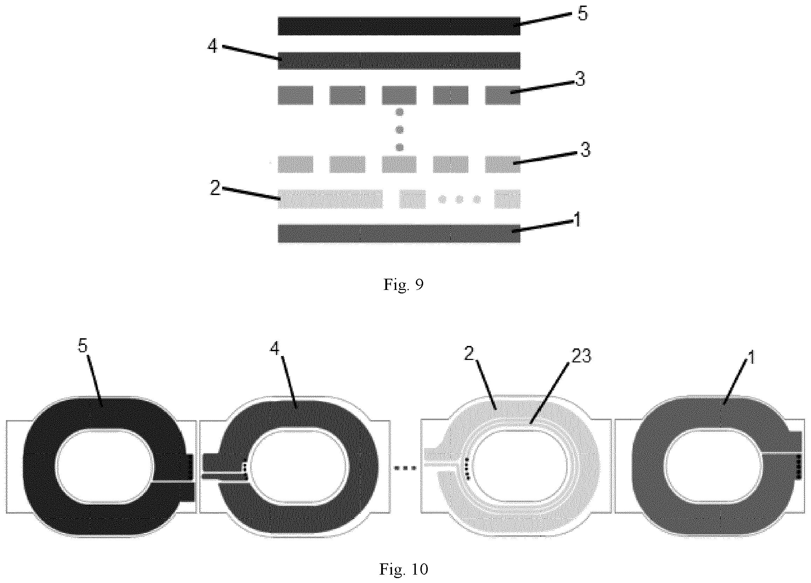

As shown in FIG. 9 and FIG.10, the bottom shielding layer 2 further includes a second auxiliary winding 23 which is provided in the inner circle of the shielding coil of the bottom shielding layer 2.

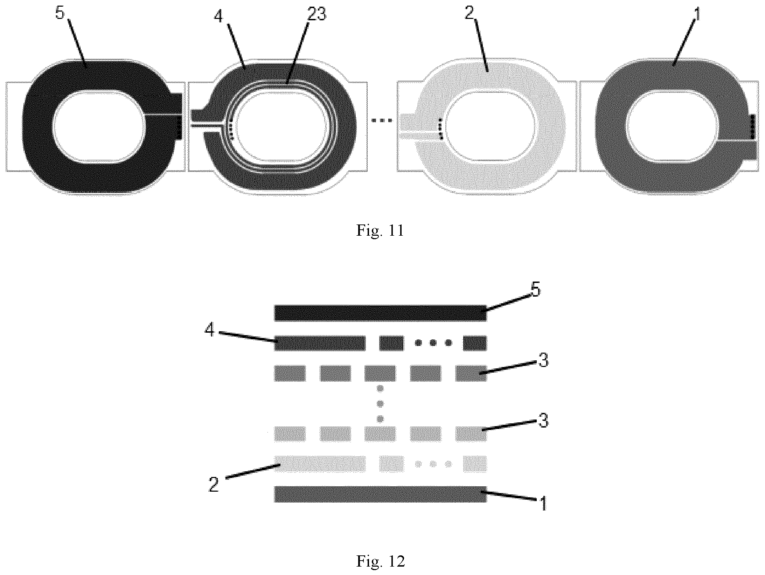

Alternatively, as shown in FIG. 1 and FIG.11, the top shielding layer 4 may further include a second auxiliary winding 23 which is provided in the inner circle of the shielding coil of the top shielding layer 4.

Alternatively, as shown in FIG. 12 and FIG. 13, both the bottom shielding layer 2 and the top shielding layer 4 include a second auxiliary winding 23 which is provided in the inner circle of the shielding coil of the bottom shielding layer 2 and the top shielding layer 4.

Wherein, the number of turns of the second auxiliary winding 23 is less than 3.

One end of the shielding coil of the top shielding layer 4 or the bottom shielding layer 2 is connected to the primary static electrical point, and the other end of the shielding coil of the top shielding layer 4 or the bottom shielding layer 2 is suspended, or connected in series with the primary coil 3, or connected in series with the second auxiliary winding 23.

As shown in FIG. 14 and FIG. 15, Ⓧ marks the primary static electrical point and the secondary static electrical point. The output has two applications. FIG. 14 shows the anode of the output diode is connected to the transformer, and the cathode of the output diode is connected to the anode of the output capacitor. FIG. 15 shows the cathode of the output diode is connected to the transformer, and the anode of the output diode is connected to the cathode of the output capacitor. In practice, for the convenience of PCB wiring, the starting end of the shielding layer may be connected to one of the two static electrical points of the input according to the actual application.

The planar transformer of the application can be flexibly designed according to the different voltage output ranges of the power conversion circuit, and the ratio of clockwise coil/counterclockwise coil of the shielding layer can be varied from 0.1/0.9 to 0.9/0.1. The ratio of clockwise/counterclockwise coil of the shielding layer and the auxiliary winding varies from 1/10 to 1.5/1. The best EMI performance could be achieved by selecting a suitable ratio combination, at the same time, the number of PCB layers of the planar transformer could be reduced, which is beneficial to reduce the cost of the planar transformer.

### Embodiment 5:

This embodiment provides a power converter which adopts any one of the planar transformers described in the foregoing embodiments. When the output voltage of the power converter is between 5v and 24v, the PCB board of the planar transformer is designed with 6~14 layers structure.

The planar transformer, from bottom to top, includes a bottom secondary coil, a bottom shielding layer, a primary coil, a top shielding layer and a top secondary coil. Both the top shielding layer and the bottom shielding layer include shielding coils, and at least one of the shielding coils of the top shielding layer and the bottom shielding layer includes clockwise coils of N1 turns and counterclockwise coils of N2 turns. The compensation common-mode current of the planar transformer is adjusted by adjusting the ratio of N1 to N2.

The planar transformer of the application is suitable for adapters or chargers with an output voltage of 5V~24V, or power converters, adapters or chargers with a fixed voltage (5V/12V/15V/19V/20V/24V) or a variable voltage (5V-9V/ 5V-1IV/ 5V-12V/ 5V-15V/ 5V-20V) within this voltage range.

The application also provides a circuit board with power conversion function. The circuit board includes, any one of the planar transformers described in the foregoing embodiments. As a non-limiting example, the circuit board of the application may be either the mainboard of the power adapter or the circuit board of other electrical and electronic products, as long as the circuit board is provided with the planar transformer of the application. The planar transformer may be formed on the circuit board by a circuit board fabrication process. Alternatively, the planar transformer is electrically connected to the circuit board, for example, the planar transformer is soldered or plugged into the circuit board via pins.

It should be appreciated by those skilled in the art that the foregoing various preferred embodiments may be freely combined, superimposed, provided that they do not conflict.

It should be understood that the embodiments above are merely illustrative and not restrictive and that, without departing from the basic principles of the application, various obvious or equivalent modifications or substitutions that may be made by a person skilled in the art, shall fall within the protection scope of the claims of the application.

## Claims

1. A planar transformer, comprising a secondary coil layer, a first shielding layer and a primary coil layer, wherein:
the secondary coil layer, the first shielding layer and the primary coil layer are disposed in a printed circuit board (PCB), the secondary coil layer comprises at least part of a secondary coil, the secondary coil are provided with a secondary static electrical point, the first shielding layer is arranged between the secondary coil layer and the primary coil layer;
the first shielding layer comprises a first shielding coil, the first shielding coil comprises a first shielding coil segment of N1 turns and a second shielding coil segment of N2 turns, the first shielding coil segment comprises a first shielding static electrical point and a first shielding free end, the second shielding coil segment comprises a second shielding static electrical point and a second shielding free end;
the winding direction of the first shielding coil segment is the same as the winding direction of the secondary coil, and the winding direction of the first shielding coil segment is opposite to the winding direction of the second shielding coil segment;
the winding direction of the secondary coil refers to the winding direction of the secondary coil starting from the secondary static electrical point; the winding direction of the first shielding coil segment refers to the winding direction of the first shielding coil segment starting from the first shielding static electrical point; the winding direction of the second shielding coil segment refers to the winding direction of the second shielding coil segment starting from the second shielding static electrical point.

2. The planar transformer of claim 1, wherein N1+N2≤1 when the number of turns of the part of the secondary coil in the secondary coil layer is 1.

3. The planar transformer of claim 1, wherein N1>1 and N1+N2≤2 when the number of turns of the part of the secondary coil in the secondary coil layer is 2.

4. The planar transformer of claim 1, further comprising a second shielding layer; wherein:
the secondary coil layer comprises a first secondary coil layer and a second secondary coil layer; the first secondary coil layer comprises a first secondary coil as part of the secondary coil, and the second secondary coil layer comprises a second secondary coil as part of the secondary coil; each of the first secondary coil and the second secondary coil is not more than one turn; the number of turns of the first secondary coil is substantially equivalent to the number of turns of the second secondary coil;
the first shielding layer is arranged between the first secondary coil layer and the primary coil layer, the second shielding layer is arranged between the second secondary coil layer and the primary coil layer;
the second shielding layer comprises a second shielding coil, the second shielding coil comprises a third shielding static electrical point and a third shielding free end, the winding direction of the second shielding coil is the same as the winding direction of the secondary coil, the number of turns of the second shielding coil is substantially equivalent to the number of turns of the second secondary coil;
the winding direction of the second shielding coil refers to the winding direction of the second shielding coil starting from the third shielding static electrical point.

5. The planar transformer of claim 1, wherein the width of the first shielding coil segment and the width of the second shielding coil segment are respectively substantially equivalent to the width of the secondary coil, and the first shielding coil segment and the second shielding coil segment are in the same winding ring.

6. The planar transformer of claim 1, wherein N1>N2.

7. The planar transformer of claim 1, the first shielding layer further comprising a first auxiliary winding, wherein the first auxiliary winding is provided with a first auxiliary static electrical point and a first auxiliary dynamic electrical point, the first auxiliary winding is positioned on the radially inner side of the first shielding coil; the number of turns of the first auxiliary winding is substantially equivalent to the number of turns of the secondary coil; the winding direction of the first auxiliary winding is the same as the winding direction of the secondary coil, and the winding direction of the first auxiliary winding refers to the winding direction of the first auxiliary winding starting from the first auxiliary static electrical point; or,
the second shielding layer further comprising a second auxiliary winding, wherein the second auxiliary winding is provided with a second auxiliary static electrical point and a second auxiliary dynamic electrical point, the second auxiliary winding is positioned on the radially inner side of the second shielding coil; the number of turns of the second auxiliary winding and the number of turns of the second shielding coil are substantially equivalent to the number of turns of the secondary coil respectively; the winding direction of the second auxiliary winding is the same as the winding direction of the secondary coil, and the winding direction of the second auxiliary winding refers to the winding direction of the second auxiliary winding starting from the second auxiliary static electrical point.

8. The planar transformer of claim 5, wherein 0.8<N1+N2<1 when the number of turns of part of the secondary coil in the secondary coil layer is 1.

9. The planar transformer of claim 5, wherein N1>1 and 1.8≤N1+N2<2 when the number of turns of part of the secondary coil in the secondary coil layer is 2.

10. A planar transformer, comprising a bottom secondary coil, a bottom shielding layer, a primary coil, a top shielding layer and a top secondary coil from bottom to top, wherein the top shielding layer and the bottom shielding layer both comprise shielding coils, at least one shielding coil of the top shielding layer and the bottom shielding layer comprises clockwise coils of N1 turns and counterclockwise coils of N2 turns, and the compensation common mode current of the planar transformer is adjusted by adjusting the ratio of N1 to N2.

11. The planar transformer of claim 10, wherein the sum of N1 and N2 is less than 1

12. The planar transformer of claim 11, wherein the bottom secondary coil is wound clockwise or counterclockwise starting from a secondary static electrical point potential; the top secondary coil and the bottom secondary coil are connected in series or in parallel, and the winding direction of the top secondary coil is the same as the winding direction of the bottom secondary coil.

13. The planar transformer according to claim 12, wherein the shielding coil of the bottom shielding layer comprises clockwise coils of N1 turns and counterclockwise coils of N2 turns, the shielding coil of the top shielding layer is a coil of one turn starting from a primary static electrical point potential, and the winding direction of the shielding coil of the top shielding layer is the same as the winding direction of the top secondary coil.

14. The planar transformer of claim 12, wherein the shielding coil of the top shielding layer comprises clockwise coils of N1 turns and counterclockwise coils of N2 turns, the shielding coil of the bottom shielding layer is a coil of one turn starting from a primary static electrical point potential, and the winding direction of the shielding coil of the top shielding layer is the same as that of the secondary coil of the bottom layer.

15. The planar transformer of claims 13 or 14, wherein the top shielding layer or/and the bottom shielding layer further comprises an auxiliary winding which is located in the inner ring of the shielding coil of the top shielding layer or/and the bottom shielding layer, the number of turns of the auxiliary winding is less than 3, one end of the shielding coil of the top shielding layer or the bottom shielding layer is connected to a primary static electrical point, and the other end of the shielding coil of the top shielding layer or the bottom shielding layer is suspended.

16. A power converter, comprising a planar transformer of any one of claims 1 to 9, or a planar transformer of any one of claims 10 to 15.

17. The power converter of claim 16, wherein the number of PCB layers of the planar transformer is 6-14 when the output voltage of the power converter is between 5v-24v.

18. A circuit board with power conversion function, comprising a planar transformer of any one of claims 1 to 15.

19. The circuit board of claim 18, wherein the planar transformer is formed on the circuit board by a circuit board fabrication process; or
the planar transformer is electrically connected to the circuit board.
